# FASCICULE DE BREVET EUROPEEN

(11) **EP 0 313 496 B1**
(45) Date de publication et mention de la délivrance du brevet: **02.03.1994**
(21) Numéro de dépôt: 88500094.3
(22) Date de dépôt: 17.10.1988
(51) Int. Cl.: A47J 31/56, A47J 31/24, A47J 31/40, A47J 31/06, A47J 31/52

(54) **Machine à café sous pression pour la préparation rapide du café**
Maschine zur Herstellung von Espresso-Kaffee
Machine for making espresso coffee

(30) Priorité: 17.10.1987 ES 8703174
(43) Date de publication de la demande: 26.04.1989
(73) Titulaire: FUTURMAT COMERCIAL DE HOSTELERIA, S.A., E-08012 Barcelona (ES)
(72) Inventeur: Gil de Miguel, José Miguel, E-08012 Barcelona (ES)
(74) Mandataire: Manresa Val, Manuel

(56) Documents cités:
- EP-A- 0 004 659
- EP-A- 0 093 366
- DE-A- 2 434 336
- FR-A- 953 390
- FR-A- 2 544 186
- FR-A- 2 544 188
- US-A- 2 868 178
- US-A- 3 584 568

## Description

Le présent brevet d'invention concerne une machine à café sous pression pour la préparation rapide du café.

Cette sorte de machine comprend en général, comme parties basiques, les suivantes:
- un bâti porteur de l'ensemble
- une carcasse, enveloppe
- una chaudière, avec des moyens d'alimentation d'eau à l'intérieur
- des moyens de chauffage installés à l'intérieur de ladite chaudière
- des moyens de contrôle de la température de l'eau de ladite chaudière, et de la pression interne de l'enceinte.
- des moyens pour la fourniture contrôlée d'un volume pédéterminé d'eau à une température et pression préalablement établies, depuis ladite chaudière vers des chambres indépendantes, où ledit fluide entre en contact avec une masse de café moulu, et de ces chambres on obtient le café liquide.
- des moyens pour le remplissage avec du café moulu, et pour l'extraction d'une pastille sèche de café, desdites chambres, formés par de petits godets adaptables aux dites chambres.
- dispositifs pour faire circuler un volume préalablement déterminé de vapeur d'eau, jusqu'à la chaudière, vers des tuyaux d'approvisionnement.
- des dispositifs pour faire circuler un volume préalablement déterminé d'eau chaude, depuis la chaudière, vers des tuyaux d'approvisionnement.
- des tuyaux pour l'approvisionnement de vapeur d'eau.
- des tuyaux pour l'approvisionnement d'eau.
- des moyens pour la détection de diverses variables fonctionnelles de la machine.

En relation avec les machines pour la préparation rapide du café existantes en ce moment sur le marché, celle qui constitue l'objet de ce brevet d'invention, présente une série d'améliorations importantes, affectant les systèmes mécanique, hydraulique et de contrôle que cette machine comporte.

Ainsi, tout d'abord, la machine proposée, est caractérisée en ce que les moyens de chauffage installés à l'intérieur de ladite chaudière, formés par une résistance électrique blindée, adoptent une configuration et disposition de montage permettant son installation et//ou démontage sans qu'il faille vider ladite chaudière, comme par contre il est obligatoire dans les machines pour la préparation rapide du café, conventionnelles, dans lesquelles ladite résistance est installée en sa partie basse pour affecter tout le volume d'eau.

La pression de l'enceinte de la chaudière, au lieu d'être contrôlée par un pressostat de précision, complexe, d'un coût élevé et volumineux, comme est le cas des machines conventionnelles, est gouvernée à partir d'une régulation automatique de la puissance électrique des moyens de chauffage, en combinaison avec un pressostat à régulation fixe, en fonctions de sécurité. Concrètement, le branchement et débranchement de la résistance électrique blindée, chauffante, peuvent être opérés par un système de contrôle de la puissance électrique, qui emploie un commutateur de triac avec détecteur de passage à zéro. Avec cela on obtient une économie importante d'énergie et on accroît la vie utile de ladite résistance, car son alimentation est progressive.

Ledit système fournit de plus un différentiel de température dans la chaudière de +/- 1ºC., ce qui a une répercussion sur l'homogénéité de la qualité du café liquide, durant le cycle opératoire de la machine.

Le pressostat à régulation fixe, est installé en fonction de sécurité, pour le cas d'inhabilitation accidentelle du contrôle automatique cité.

Une autre caractéristique de la machine à café sous pression pour la préparation rapide du café, objet du brevet, est l'intercalation de dispositifs d'actionnement dans les moyens pour faire circuler l'eau ou la vapeur d'eau, vers les points de consommation, qui rendent possible d'obtenir plusieurs débits différents, desdits fluides à chacun des points de service.

Ces dispositifs d'actionnement associés a chaque conduit d'eau ou de gaz, au lieu de comporter une électrovalve comme dans les machines à café connues, sont formés selon l'invention, par un ensemble de deux électrovalves aux débits différenciés, associés à chaque tuyau d'approvisionnement de liquide ou de gaz avec possibilité d'actionnement simultané ou indépendant, permettant ainsi approvisionner trois débits différents desdits fluides. Avec cela on obtient une adaptation de l'approvisionnement d'eau chaude ou de vapeur aux besoins précis dans chaque cas.

Est également caractéristique de cette machine, l'intégration de moyens pour contrôle individualisé de la température de chacune des chambres, à partir quoi on obtient la distribution de café liquide, ainsi que l'utilisation de moyens pour détecter la présence des petits godets cités, associées à chacune des chambres.

La machine peut également comporter un microprocesseur comme celui appliqué à des machines de ce sécteur de la technique et exposé dans EP-B-093366, et une circuiterie électronique d'appui qui gouverne la totalité des fonctions basiques d'entretien, d'autocontrôle et de service, y inclus chacune des chambres d'infusion de café et un commuteur à poussoir qui permet une distribution continue, indépendante du contrôle centralisé du microprocesseur.

La plupart des moyens et dispositifs d'actionnement cités précédemment, sont opératoires, indépendamment de l'inclusion d'un microprocesseur sur la machine, si bien, le contrôle centralisé de toutes les fonctions de l'ensemble, au moyen d'un microprocesseur, accroît ses propriétés et rend possible l'inclusion d'autres moyens dont l'action combinée permet d'obtenir une plus grande homogénéité et/ou régularité du fonctionnement de la machine.

La machine peut comporter de plus d'autres moyens et dispositifs développés en partant de l'utilisation d'un microprocesseur, basiquement appliqués à un contrôle très précis des séquences opératoires, ainsi que l'enregistrement des incidences.

Ainsi, la dosification de l'approvisionnement d'eau depuis la chaudière vers les chambres individuelles où se produit l'infusion du café, se fait en lieu de sous contrôle d'un compteur volumétrique comme dans le brevet ES 544982, par la combinaison d'un compteur volumétrique et un contrôle complémentaire du temps de durée de l'approvisionnement. De cette façon et en fixant un temps d'approvisionnement par dose, on peut compenser les erreurs dues à des dérèglements dans le dispositifs compteur volumétrique.

L'incorporation d'un microprocesseur sur la machine rend également possible, un contrôle très exact du temps de durée et des conditions de l'approvisionnement d'eau vers les chambres où se produit l'infusion du café. Ainsi, au moyen d'ouvertures et de fermetures, à un ou plusieurs stages d'électrovalves intercalées dans les conduites d'approvisionnement, on peut obtenir un accès du liquide à la masse de café dans des conditions optimales (pression et débit) pour obtenir une correcte infusion. Par ailleurs, une des électrovalves appliquées au contrôle de l'approvisionnement de la vapeur à l'extérieur, sera activé, automatiquement sous le contrôle du microprocesseur, en mettant en communication l'enceinte intérieure de la chaudière, avec l'atmosphère, après une période de temps préalablement fixée de débranchement ou d'arrêt de la machine.

Dans ces circonstances, et lorsque la machine se refroidit, la vapeur qui remplit l'enceinte par-dessus le niveau du liquide, se liquéfie et dans l'espace qu'il occupe il se produit une dépression qui doit être éliminée pour éviter qui puissent passer accidentellement des substances alimentaires à l'intérieur de la chaudière, absorbée par les tuyaux d'approvisionnement de vapeur ou d'eau.

Dans cette machine, à partir du moment de son branchement, et après être restée arrêtée pendant suffisamment de temps pour que le phénomène cité se produise, une prise atmosphérique de l'enceinte intérieure de la chaudière aura lieu, après un temps de démarrage préalablement fixé.

La machine comporte de préférence aussi à la place d'un dispositif indicateur du niveau d'eau tel que décrit au brevet FR 2544186 une sonde multiple.

Pour mieux comprendre les caractéristiques de cette machine, on continuera sa description, à partir de ce point en faisant référence à des pages de dessins, dans lesquelles est représentée une possible réalisation de celle-ci, présentée uniquement à titre illustratif et non limitatif de son essentialité, conformément au détail suivant:
La figure 1, illustre une perspective générale de la machine.
La figure 2, correspond à un détail d'unn panneau portant une série de commandes et d'indicateurs, situé sur la partie frontale de la machine, par-dessus les groupes de distribution du café liquide.
La figure 3 correspond à un détail en section dudit panneau.
La figure 4 illustre la chaudière, ayant installé à son intérieur une résistance électrique chauffante, qui est détaillée en pointillés.
La figure 5 montre également la chaudière de la machine, en perspective, avec l'indication en pointillés d'une sonde multiple installée à son intérieur.
Dans la figure 6, on a représenté avec un trait plus épais, une des conduites d'approvisionnement de la vapeur, associée à un groupe d'électrovalves, pour la communication de l'enceinte intérieure de la chaudière avec l'atmosphère.
La figure 7 correspond à un détail qui illustre l'utilisation de deux électrovalves associées à un des tuyaux d'approvisionnement d'eau ou de vapeur.
Dans la figure 8, on détaille la structure de montage de deux des tuyaux de distribution d'eau et de gaz de la machine, monté de façon à pivoter sur des supports cylindriques, ancrés sur la partie frontale de la machine.
Dans la figure 9 on montre un détail d'interrelation desdits tuyaux à des rotules, pour leur montage giratoire, par rapport aux supports.
La figure 10 montre une sonde pour la détection de la présence du petit godet dans la cavité d'infusion.
Finalement dans la figure 11, on détaille une sonde associée au drain du plateau, situé sur la base avant de la machine par-dessous les chambres de distribution de café liquide.

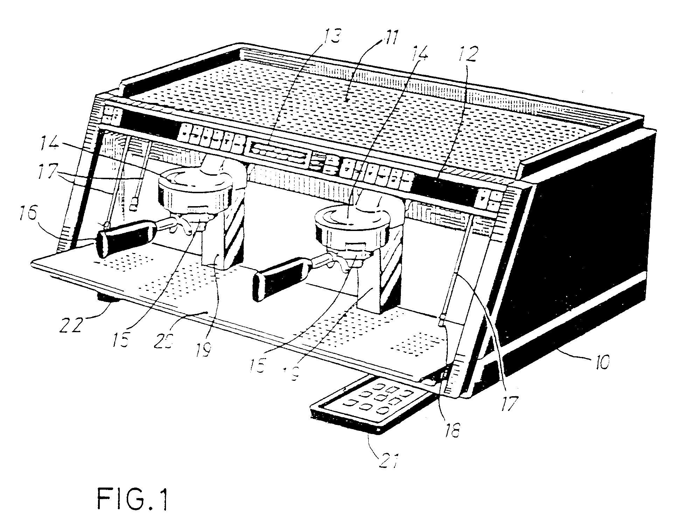

Selon la figure 1, la machine pour la préparation rapide du café préconisée, comporte une carcasse -10- avec un empattement grillagé -11-, à sa partie supérieure, sur la partie frontale duquel on remarque un panneau -12-, portant une série de poussoirs et un écran de visualisation -13- par exemple un "display" fluorescent, avec des caractères alphanumériques, qui fournisssent l'information ponctuelle des variables à contrôler sur la machine et des messages respectifs d'avertissement, conformément à ce qui a été expliqué jusqu'à ce point.

Au-dessous dudit panneau -12-, on remarque deux groupes indépendants -14- , pour la distribution de café liquide, chacun d'eux comportant une chambre d'infusion, formée par une semi-partie mobile constituée par un petit godet -15-, retirable, adaptable à une semi-chambre statique et munie d'une poignée -16- , pour rendre sa manipulation plus aisée. Des deux côtés desdits groupes -14-, pour la distribution du café liquide, dont le nombre doit être entendu seulement à titre d'exemple, sont agencés des tuyaux allongés -17-, parachevés par une buse -18-, pour l'approvisionnement de l'eau et de la vapeur depuis la chaudière de la machine. Chaque groupe -14-, possède une électrovalve correspondante d'activation installée à l'intérieur des corps -19-.

Au-dessous des groupes pour la distribution du café liquide, apparait un plateau -20-, grillagé aux zones de correspondance verticale avec lesdits groupes -14-et avec les tuyaux -17-.

A la partie inférieure dudit plateau, sur le côté droit,il est représenté un clavier alphanumérique -21-, optionnel, pouvant être incorporé à la machine pour la programmation de diverses séquences par l'usager. Ainsi, par exemple, on peut faire apparaître sur l'écran de visualisation -13-, divers messages de diverses sortes, par exemple, publicitaires, de renseignement du local ou autres. Il sera également possible de modifier à partir dudit clavier, la durée de l'étape de distribution, la dosification de l'eau, etc.

Ledit clavier alphanumérique -21-, est intégré dans une entaille , non visible, située à côté de la base de la machine.

L'ensemble repose sur un bâti de support -22-.

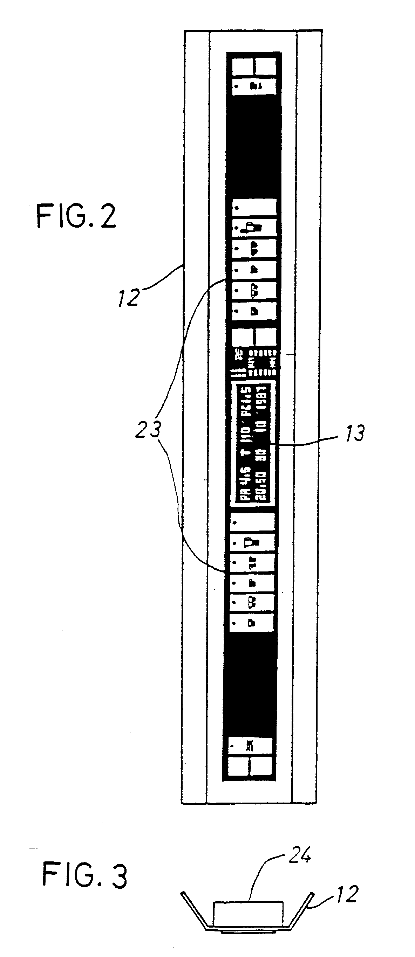

Sur la figure 2, on montre avec plus de détails, le panneau -12-, frontal, de commandes de la machine, et on y remarque en plus d'un groupe de poussoirs -23-, pour chacun des groupes de distribution de café liquide, l'écran de visualisation -13-, où on trouve indiquées, dans ce cas, la pression, la température de la chaudière, la pression du réseau, ainsi que l'heure et la date. Tel qu'il a été indiqué antérieurement sur cet écran -13-, étant donné son caractère alphanumérique, pourront apparaître toutes sortes de messages utiles pour renseigner l'usager.

Dans la figure 3, le même panneau-12- apparaît vu en coupe, on y voit installé sur sa face postérieure une des boîtes -24-, qui hébergera la circuiterie d'appui de l'ensemble.

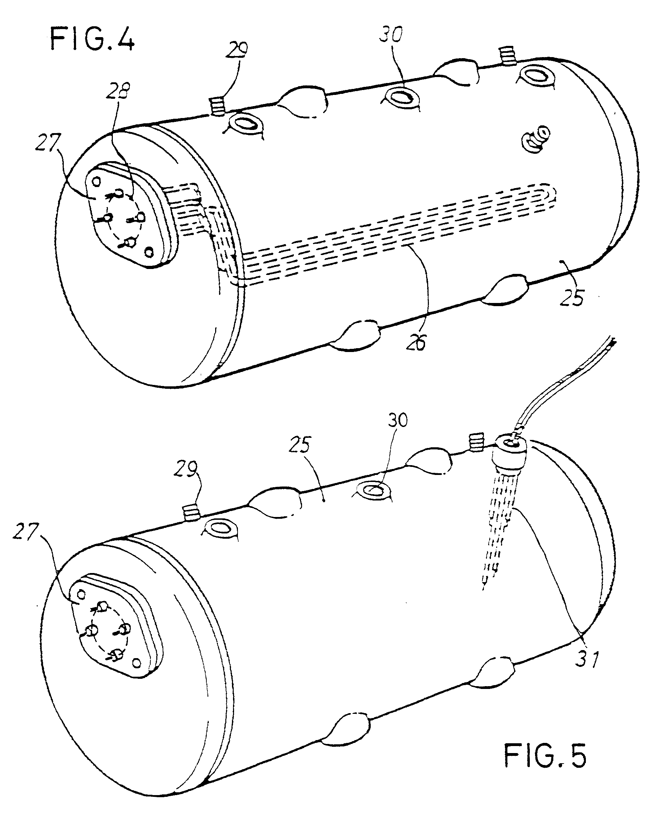

La figure 4 montre une possible réalisation des moyens de chauffage de la chaudière -25-, de la machine, formés par une résistance électrique, blindée -26-, dessinée en pointillés, laquelle est caractérisée, comme on peut voir dans le dessin, en ce qu'elle présente dans une portion iniciale, prés d'une plaque -27-, de support, (qui compote de plus les éléments de branchement), une configuration initiale en coude, qui est continuée par le tronçon principal le plus long.Dans la chaudière apparaissent plusieurs raccords -29-, et conduites de sortie -30-, pour le branchement des tuyaux d'approvisionnement d'eau et de vapeur vers les points de consommation et pour le prises d'alimentation.

Ladite résistance chauffante -26-, est installée à l'intérieur de la chaudière -25-, en l'insérant à travers un orifice -28-, situé à la partie du haut des bases, aux extrémités de ladite chaudière -25-, dont l'orifice reste par-dessus le niveau maximum de liquide de ladite chaudière -25-;avec cela on obtient que la résistance -26-, reste, à sa partie principale, submergée en permanence dans le liquide, et rend possible son montage ou extraction de la chaudière -25-, sans qu'il faille la vider, un aspect qui a une répercussion très favorable sur l'économie dans l'entretien de la machine.

La figure 5 montre égalment représenteé en pointillés, une sonde multiple -31-, installée à l'intérieur de la chaudière -25-. Ladite sonde -31-, permet la détection de divers niveaux maximum-minimum de l'eau dans la chaudière en permettant de pouvoir travailler avec divers niveaux de liquide et par conséquent de vapeur dans ladite chaudière, adaptés aux besoins particuliers de consommation, précisément, de vapeur par l'usager. De cette façon le volume liquide et de vapeur qu'héberge la machine pourra être réglé par l'usager, en optimisant la consommation énergétique qu'exige la chaudière de la machine.

La figure 4, illustre schématiquement un ensemble de deux électrovalves -32-, -33-, associées opératoirement à un des tuyaux d'approvisionnement -17-, pour l'approvisionnement extérieur de vapeur d'eau, depuis la chaudière -25-, à cet effet chacune desdites électrovalves est reliée par des tuyaux -34- , -35-, à la partie du haut de la chaudière -25-. Dans cette figure on a représenté le tuyau -34-, avec un trait plus épais , en voulant indiquer avec cela qu'avec l'activation de l'électrovalve -33-,qui sera utilisée normalment pour l'approvisionnement de la vapeur d'eau à l'extérieur, on peut établir également une communication avec l'atmosphère de l'intérieur de l'enceinte de la chaudière, à un certain moment, et plus particulièrement pour éliminer la dépression pouvant arriver à se produire dans ladite zone, pour les causes expliquées auparavant.

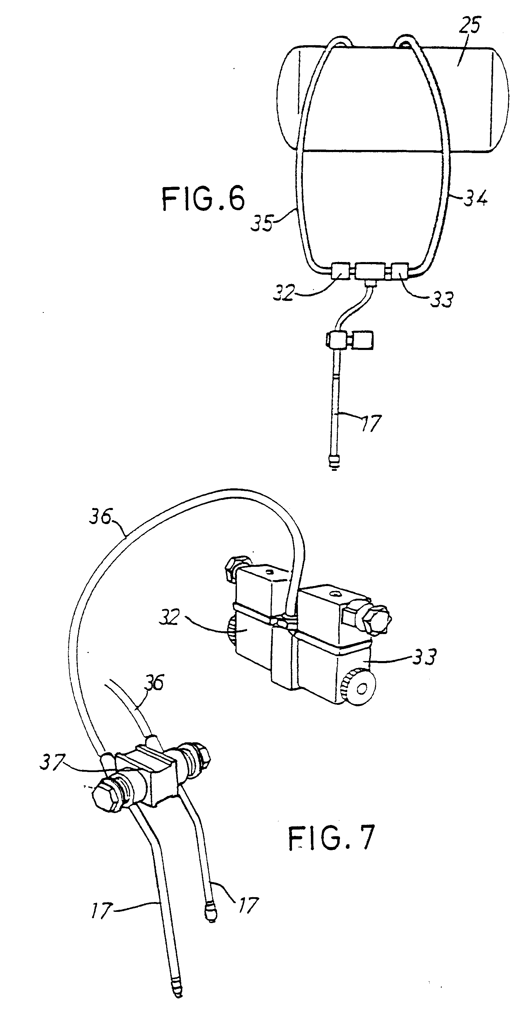

Dans la figure 7, on montre avec plus de détails la liaison entre les deux électrovalves -32-, -33-, et un des tuyaux -17-,d'approvisionnement de vapeur ou d'eau, au moyen d'un tuyau souple -36-. Dans cette figure on peut voir que les tuyaux cités -17-, sont montés sur des supports -37-, avec la possibilité de tourner librement en relation avec ceux-ci.

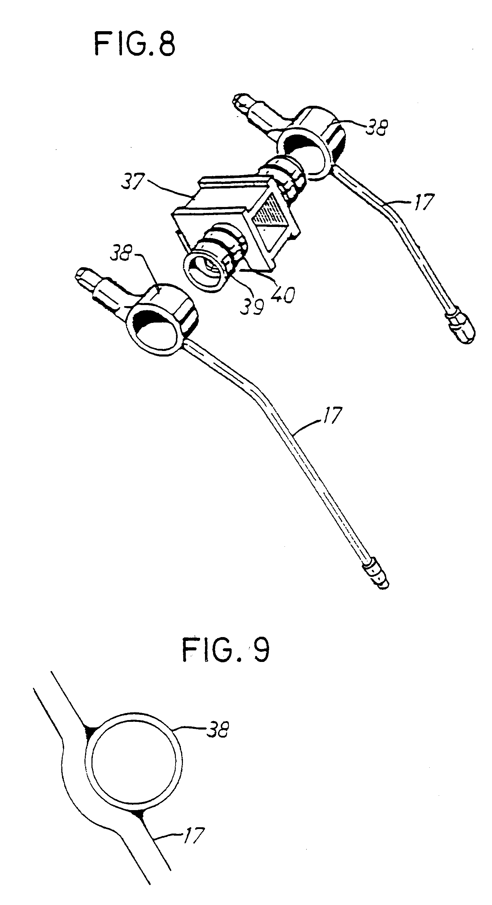

La figure 8 montre avec plus de détails la liaison entre les tuyaux -17-, et ledit support -37-. Conformément au dessin, lesdits tubes -17- ont des douilles-38- unies, qui opèrent comme des rotules, en étant disposées coaxialement sur des supports cylindriques -39-, du support -37- pour rendre plus aisé un montage pivotant. Un des joints toriques -40-, installés aux parties cylindriques -39-, à des gorges annulaires, en fournissant un frottement qui permet de stabiliser toute position angulaire désirée des tuyaux -17-, par rapport au support -37-.

Dans la figure 9, on montre un détail du joint, par exemple par soudure des douilles -38-, qui agissent comme des rotules, aux tuyaux -17-.

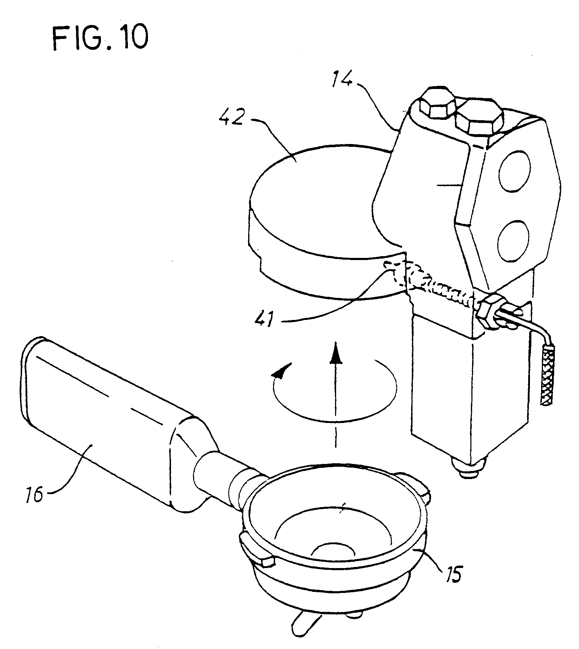

Dans la figure 10, on a représenté une sonde -41-, associée à chacun des groupes pour la distribution de café -14-, représenté sur la figure 1, cette sonde est appliquée au contrôle de l'existence ou pas du petit godet -15-, associé à la semi-chambre statique -42-, qui définit avec ledit godet -15-, la cavité d'infusion du café. On a prévu que dans l'écran de visualisation des messages se produisent qui indiquent qu'il faut restituer un certain petit godet à son groupe correspondant, pour éviter le refroidissement excessif de l'ensemble.

Chaque groupe -14-, pour la distribution du café liquide, incorporera de plus d'autres sondes , pour la détection de la température , quantité et qualité du café, moulu, ou autres paramètres d'intérêt, qui n'ont pas été représentés.

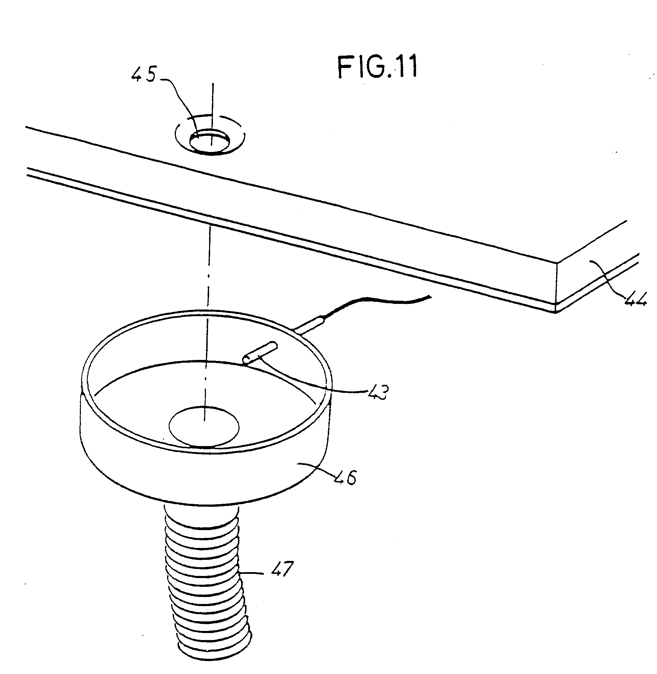

Finalement, la figure 11 représente une autre sonde -43- pour la détection des conditions du drain d'un plateau -44- , situé au-dessous de la plaque aux zones grillagées -20-, à la base de la machine, et où sont recueillies les restes du café liquide et de l'eau. Ladite sonde est montée à l'intérieur d'une coupe -46-, fixée au fond -45-, du plateau -44-, et reliée à son tour à un tube -47- souple, ondulé, de drain.

## Revendications

1. Machine à café sous pression pour la préparation rapide du café, comportant:
- un bâti porteur de l'ensemble;
- une carcasse (10) enveloppe;
- une chaudière (25), avec des moyens d'alimentation d'eau à l'intérieur;
- des moyens de chauffage (26) installés à l'intérieur de ladite chaudière (25);
- des moyens de contrôle de la température de l'eau de ladite chaudière, et de la pression interne de l'enceinte;
- des moyens pour la fourniture contrôlée d'un volume préalablement déterminé d'eau à une température et une pression préalablement établies, de ladite chaudière vers des chambres (42) indépendantes, où ledit fluide entre en contact avec une masse de café moulu, et de ces chambres (42) on obtient le café liquide;
- des moyens pour le remplissage avec du café moulu, et pour l'extraction d'une pastille sèche de café, desdites chambres (42) , formés par de petits godets (15) adaptables auxdites chambres (42);
- dispositifs pour faire circuler un volume préalablement déterminé de vapeur d'eau, depuis la chaudière, vers des tuyaux (17) d'approvisionnement;
- des dispositifs pour faire circuler un volume préalablement déterminé d'eau chaude, depuis la chaudière, vers des tuyaux (17) d'approvisionnement;
- des tuyaux (17) pour l'approvisionnement de vapeur d'eau;
- des tuyaux (17) pour l'approvisionnement d'eau.
- des moyens pour la détection de diverses variables fonctionnelles de la machine;
caractérisée en ce que:
a) les moyens (26) de chauffage installés à l'intérieur de la chaudière, formés par une résistance éléctrique blindée, adoptent une configuration et disposition de montage permettant son installation et/ou démontage sans qu'il faille vider la chaudière (25);
b) la pression de l'enceinte de la chaudière (25) est contrôlée à partir d'une régulation automatique de la puissance électrique des moyens de chauffage, en combinaison avec un pressostat à régulation fixe, en fonctions de sécurité;
c) les moyens pour faire circuler l'eau ou la vapeur d'eau vers les points d'approvisionnement, intègrent des dispositifs d'actionnement, qui rendent possible d'obtenir plusieurs débits différents, desdits fluides, à chacun des points de service, et qui sont formés par un ensemble de deux électrovalves aux débits différenciés, associés à chaque tuyau d'approvisionnement de liquide ou de gaz avec possibilité d'actionnement simultané ou indépendant,
d) l'ensemble comporte des moyens pour un contrôle individuel de la température de chacune desdites chambres (42), ainsi que pour la détection de la présence desdits godets (15) à chacune des chambres.

2. Machine d'après la revendication précédente, caractérisée en ce que la dosification de l'approvisionnement d'eau depuis la chaudière (25) vers les chambres (42) se fait par la combinaison d'un compteur volumétrique et un contrôle complémentaire du temps de durée de l'approvisionnement.

3. Machine selon la revendication 2, caractérisée en ce qu'elle comporte des moyens de contrôle des dispositifs d'actionnement (32), (33) intercalés dans les conduites d'approvisionnement d'eau depuis la chaudière vers chacune des chambres (42), pour régulation du temps de passage de l'eau à travers la masse de café, dénommé temps d'infusion.

4. Machine selon la revendication 1 caractérisée en ce que toutes les fonctions basiques d'entretien, d'autocontrôle et de service sont gouvernées par un microprocesseur et une circuiterie électronique d'appui, qui commande l'actionnement des moyens cités, y inclus chaque chambre-groupe (42), (14) d'approvisionnement de café et la machine possède un commutateur pour la distribution continue, indépendante du contrôle centralisé.

5. Machine selon les revendications 1 et 4 caractérisée en ce qu'elle comporte des moyens de contrôle de l'accès à l'intérieur de la carcasse, avec enregistrement des incidences, commandés par le microprocesseur.

6. Machine selon la revendication 1, caractérisée en ce que les moyens chauffants sont formés par une résistance blindée (26), présentant une portion initiale, à côté d'une plaque de support (27) pour son montage, une configuration en coude, à forme angulaire, qui se continue par un tronçon principal, plus long, de ladite résistance.

7. Machine selon les revendications 1 et 7 caractérisée en ce que la chaudière (25) présente un orifice (28) pour le montage de la résistance chauffante (26), défini à sa partie haute, par-dessus le niveau maximum du liquide dans la chaudière, de sorte que la résistance chauffante (26) est insérée à travers lui et étant donné la configuration coudée de sa portion initiale, ladite résistance reste à sa portion principale, submergée en permanence dans le liquide.

8. Machine selon la revendication 1 caractérisée en ce que les dispositifs pour l'actionnement de l'approvisionnement de l'eau et de la vapeur vers les points de consommation comportent deux électrovalves (32), (33) aux débits différenciés ayant la possibilité d'actionnement simultané ou indépendant, en offrant trois débits différenciés desdits fluides vers les points d'approvisionnement.

9. Machine selon les revendications 4 et 8 caractérisée en ce qu'elle comporte des moyens appliqués à l'intercommunication de la chaudière avec l'atmosphère d'actionnement automatique contrôlé par le microprocesseur, formés par une des électrovalves (32), (33) qui commande l'envoi de vapeur vers le point de consommation après une période fixée au préalable de débranchement/arrêt de la machine.

10. Machine selon la revendication 1 caractérisée en ce qu'elle comporte montée sur la chaudière (25), une sonde multiple (31), apte pour la détection de divers niveaux maximaux/minimaux, d'eau dans ladite enceinte.

11. Machine selon la revendication 1 caractérisée en ce que l'approvisionnement d'eau et de vapeur est réalisé directement à l'extérieur depuis les électrovalves (32), (33) de commande, à travers des tuyaux mobiles (17) en disposition pivotante, parachevés par des buses et qui ont unies à leur paroi interne, des rotules (38) pour un montage avec possibilité de pivotement desdits tubes, dans des supports (37) appropriés.

12. Machine selon les revendications 1 et 4 caractérisée en ce qu'elle comporte un socle pour le branchement d'un clavier alphanumérique, pour l'interaction avec le microprocesseur, ainsi qu'une entaille pour y loger ledit clavier, qui reste disposé à côté de la base de la machine.

13. Machine selon la revendication 4 caractérisée en ce que le microprocesseur est préparé pour émettre des messages d'avertissement pour le remplacement d'un épureur d'eau, intercalé dans le réseau d'alimentation, après un certain temps de travail de la machine, réglable.

14. Machine selon la revendication 1 caractérisée en ce qu'elle comporte une sonde pour le contrôle de la situation du drain d'un plateau (44), situé au-dessous des chambres (42) d'approvisionnement de café liquide.

## Claims

1. Machine for making espresso coffee, comprising:
- a supporting framework;
- an enclosing housing (10);
- a boiler (25), with means for supplying water thereinto;
- heating means (26) installed inside said boiler (25);
- means for controlling the water temperature of said boiler, and for controlling the internal pressure thereof;
- means for a controlled supply of a prearranged volume of water at a predetermined temperature and pressure, from said boiler towards some independent chambers (42), where said fluid reaches a ground coffee mass, and from said chambers (42) a coffee liquid is obtained;
- mens to fill with ground coffee said chambers (42), and for the removal of a dry coffee pastille thereof, constituted by small cups (15) adapted to said chambers (42);
- devices for producing a flow of a prearranged volume of water steam, from the boiler towards some supplying pipes (17);
- devices for producing a flow of a prearranged volume of heated water from the boiler towards some supplying pipes (17);
- pipes (17) for supplying water steam;
- pipes (17) for supplying water;
- means for the detection of several functional variables of the machine;
characterized in that:
a) the heating means (26) installed within the boiler, constituted by a metal enclosed resistor, has a shape and is so located so that its installation and/or withdrawal is possible without emptying the boiler (25);
b) the pressure within the boiler (25) is controlled from an automatic regulation of the heating means electrical output, associated with a fix calibrated pressure switch acting as a security means;
c) the means to produce a circulation of the water or water steam towards the supplying points, comprise means allowing the obtention of different rates of said fluids at each of the supplying points, and which are constituted by two electrically-operated valves of different flows, associated to each of the pipes for supplying liquid or gas, with possibility of a simultaneous or independent actuation;
d) the machine comprises means for an individual control of the temperature of each of said chambers (42) as well as for the detection of the presence of said cups (15) at each of the chambers.

2. Machine according to the previous claim, characterized in that the proportioning of the water supply from the boiler (25) towards the chambers (42) is obtained by the association of a volumetric counter and a complementary means controlling the supplying time.

3. Machine according to claim 2, characterized in that it comprises means for controlling actuating devices (32), (33), inserted in the pipe line for supplying water from the boiler towards each of the chambers (42), in order to regulate the time of water circulating through the coffee mass, named infusion time.

4. Machine according to claim 1, characterized in that all the basic functions of maintenance, self-control and service are commanded by a microprocessor and a backing electronic circuits which commands the actuation of said means including each chamber-dispenser (42), (14) for supplying coffee, and the machine has a switch for a continuous supply, independently of the centralised control.

5. Machine according to claims 1 and 4 characterized in that it comprises microprocessor-monitored means for controlling the access to the inner part of the housing with incidence recording.

6. Machine according to claim 1, characterized in that the heating means are constituted by a shield resistor (26), with an initial angular-shaped elbowed portion, adjacent a supporting plate for its positioning, which is followed by a second lengthier portion.

7. Machine according to claims 1 and 7, characterized in that the boiler (25) bears an aperture (28) for the mounting of the heating resistor (26), located at the higher part, over the maximum level of the liquid within said boiler, so that said heating resistor (26) is inserted therethrough said aperture and taking into account its elbowed-shaped initial portion, said resistor remains with its main portion, permanently submerged in the liquid.

8. Machine according to claim 1, characterized in that the devices for producing the water and steam supply towards the dispensing points comprise two electrically-operated valves (32), (33) of different flow, with the possibility of being operated at the same time or independently, so that providing three different discharges of said fluids towards the dispensing points.

9. Machine according to claims 4 and 8 characterized in that it comprises microprocessor-controlled means for automatically communicating the boiler with the atmosphere constituted by one of the electrically-operated valves (32) (33) controlling the supply of steam towards the dispensing point, which acts after a prearranged time of stopping or line dropping of the machine.

10. Machine according to claim 1, characterized in that it comprises associated to the boiler (25) a multiple probe (31), enabling the detection of several maximal and minimal levels of water within said boiler.

11. Machine according to claim 1 characterized in that the supply of water and steam is performed directly towards the exterior from the electrically-operated control valves (32), (33), through pivoting movable pipes (17) ending with nozzles, said pipes bearing integral to their external wall annular joints (38) allowing a pivoting movement of said pipes with respect to suitable supports (37).

12. Machine according to claims 1 and 4, characterized in that it bears an attachment means for connecting an alphanumeric keyboard in order to operate the microprocessor, as well a slot located at one side of the base of the machine to lodge said keyboard.

13. Machine according to claim 4, characterised in that the microprocessor is ready to furnish warning messages requesting the replacement of a water purifier, intercalated in the water line supply, after some operating time of the machine which can be adjusted..

14. Machine according to claim 1 characterized in that it comprises a probe for controlling the draining status of a tray (44) placed under the chambers (42) supplying liquid coffee.

## Patentansprüche

1. Maschine zur Herstellung von Espresso-Kaffee, bestehend aus:
- einem als Trägerelement dienender Rahmen;
- einem umfassendenden Gehäuse (10);
- einem Heizkessel (25), versehen mit Wasserleitungsmittel in das Innere desgleichen;
- Heizmittel (26), die im Inneren des ebengenannten Heizkessels (25) angebracht sind;
- Meßmittel zur Kontrolle der Wassertemperatur und des Innendruckes des erwähnten Heizkessels;
- Mittel zur kontrollierten Speisung einer vorgegebenen Wassermenge, zu einer vorgegebenen Temperatur und Druck, von dem bereits mehrfach erwähnten Heizkessel zu einem paar unabhängigen Kammern (42), in welchen die Flüssigkeit mit einer Menge gemahlenen Kaffee in Berührung kommt, Kammern (42), von welchen dann der flüssige Kaffee gewonnen wird;
- Mittel zur Füllung mit gemahlenem Kaffee und zur Entnahme der trockenen Kaffeemasse aus diesen Kammern (42), welche aus einem paar Pfannen (15) bestehen, die an die Kammern (42) anpassbar sind;
- Vorrichtungen, um eine vorgegebene Wasserdampfmenge von dem Heizkessel zu einem paar Zuflussröhen (17) durchfliessen zu lassen,
- Vorrichtungen, um eine vorgegebene Warmwassermenge von dem Heizkessel zu einem paar Zuflussröhren (17) durchfliessen zu lassen;
- einem paar Zuflussröhren (17), zur Zuführung von Wasserdampf,
- einem paar Zuflussröhren (17), zur Zuführung von Wasser;
- Überwachungs- und Meßmittel zur Meldung verschiedener Betriebsvariablen der Maschine,
dadurch gekennzeichnet daß:
a) die Heizmittel (26), bestehend aus einem abgeschirmten elektrischen Heizwiderstand, die im Inneren des Heizkessels angebracht sind, so gestaltet sind, daß zu deren Ein- oder Ausbau der Heizkessel (25) nicht geleert werden muß;
b) der Innendruck im Heizkessel (25) von einer automatischen Regelung der elektrischen Leistung der Heizmittel, in Zusammenhang mit einem festeingestellten Druckregler, als Sicherheitselement, gesteuert wird;
c) die Mittel, die das Wasser oder den Wasserdampf zu den Speisestellen durchfliessen lassen, eine Betätigunsvorrichtung zusammenstellen, welche ermöglicht, daß verschiedene Durchflußmengen der ebengenannten Fluiden erhalten werden und welche sich aus einer Gruppe von zwei Elektroventilen mit differenzierten Durchflußmengen zusammensetzt und welche mit jeder der Flüssigkeits- oder Dampfzufuhrröhren verbunden sind und gemeinsam oder unabhängig voneinander betätigt werden können;
d) diese Maschine Mittel zur Temperaturkontrolle in jeder einzelnen der bereits erwähnten Kammern (42), sowie zur Feststellung des Vorfindens der bereits erwähnten Pfannen (15) in jeder dieser Kammern, aufweist.

2. Maschine nach dem vorgehenden Anspruch, dadurch gekennzeichnet, daß die Dosierung der Wassermenge, die von dem Heizkessel (25) den Kammern (42) zugeführt wird, mittels eines Strömungsmessers in Verbindung mit einem gesonderten Kontrollmittel der Zuflußzeit, erfolgt.

3. Maschine nach Anspruch 2, dadurch gekennzeichnet, daß diese Kontrollmittel der Betätigungsvorrichtungen (32, 33) aufweist, welche sich zwischen den Wasserzuflussröhren von dem Heizkessel zu jede der Kammern (42) befinden und zur Regelung der Durchflußzeit, Aufgusszeit genannt, durch die Kaffeemenge dienen sollen.

4. Maschine nach Anspruch 1, dadurch gekennzeichnet, daß alle Grundfunktionen, die Wartung, Selbstkontrolle und Betrieb angehen, durch einen Mikroprozessor und einer elektrischen Hilfsschaltung gesteuert werden, welche die Betätigung der schon genannten Mitteln steuern, wobei jede Kammergruppe (42), (14) mitinbegriffen werden und daß die Maschine einen Schalter zur kontinuierlichen Durchflussmengenverteilung aufweist, welcher von der Hauptsteuerung unabhängig ist.

5. Maschine nach den Ansprüchen 1 und 4, dadurch gekennzeichnet, daß diese Steuerungsmittel zum Zutritt ins Gehäuseinnere aufweist, mit Aufzeichnung der Betriebszwischenfälle und diese Steurungsmittel durch einen Mikroprozessor gesteuert werden.

6. Maschine nach Anspruch 1, dadurch gekennzeichnet, daß die Heizmittel aus einem abgeschirmten Widerstand (26) bestehen, welcher, in einem ersten Abschnitt, neben einer Halteplatte (27), die zu dessen Einbau vorgesehen ist, eine Ausbildung in Form einer abgwinkelten Kröpfung aufweist und welche sich dann, in ihrem Hauptabschnitt, welcher länger als der vorangegange ist, des ebengenannten Widerstandes erstreckt.

7. Maschine nach den Ansprüchen 1 und 7, dadurch gekennzeichnet, daß der Heizkessel (25) eine Bohrung (28) zum Einbau des Heizwiderstandes (26) aufweist, welche in ihrem Oberabschnitt, oberhalb des Flüssigkeitshöchststandes im Heizkessel, dadurch gekennzeichnet ist, daß der Heizwiderstand (26) quer zu dieser eingesetzt wird und daß durch die abgewinkelte Ausbildung in ihrem Anfangsabschnitt, ebengennanter Widerstand, in seinem Hauptabschnitt, ständig in der Flüssigkeit taucht.

8. Maschine nach Anspruch 1, dadurch gekennzeichnet, daß die Betätigungsvorrichtung zur Wasser- und Wasserdampfzuführung zu den Verbrauchstellen aus zwei Elektroventilen (32), (33) bestehen, welche verschiedene Durchflussmengen aufweisen und welche gemeinsam oder unabhängig voneinander betätigt werden können und dadurch gekennzeichnet, daß diese drei verschiedene Durchflussmengen der ebengenannten Fluiden zu den Verbrauchstellen liefern.

9. Maschine nach den Ansprüchen 1 und 8, dadurch gekennzeichnet, daß diese Verbindungsmittel zwischen dem Heizkessel und der Außenluft aufweist, die automatisch betätigt werden und durch den Mikroprozessor gesteuert werden, wobei ebengennante Mittel aus einem der Elektroventile (32), (33) bestehen, welches die Dampfzuführung zu einem der Verbrauchsstellen, nach einer vorgegebenen Abschalt-, bzw. Stillstandzeit der Maschine, steuert.

10. Maschine nach Anspruch 1, dadurch gekennzeichnet, daß diese einen Mehrfachlot (31), auf dem Heizkessel (25) aufgebaut, aufweist, welches verschiedene Wasserhöchst-, bzw., Niedrigsts- Höchstände im Kesselinneren messen kann.

11. Maschine nach Anspruch 1, dadurch gekennzeichnet, daß die Wasser-, bzw., Wasserdampzuführung zur Außenluft, auf direkte Weise über die Steuerelektroventile (32), (33) und durch ein paar beweglichen Röhren (17), welche um die senkrechte Achse drehend angeordnet sind und welche in einer Düse enden und an der Außenwand eine Kugelpfannenhülse (38) aufweisen, die einen drehbaren Einbau der ebengenannten Röhren auf einer geeigneten Halterung (37) ermöglichen.

12. Maschine nach den Ansprüchen 1 und 4, dadurch gekennzeichnet, daß diese einen Sockel aufweist, um eine alphanumerische Tastatur anschließen zu können, welche mit dem Mikroprozessor gekoppelt ist und auch eine Ausnehmung zur Aufnahme dieser Tastatur aufweist, die an der Maschinenauflage angeordnet ist.

13. Maschine nach Anspruch 4, dadurch gekennzeichnet, daß der Mikroprozessor vorbereitet ist, um die Ersetzung eines Wasserreinigers, welcher im Wasserversorgungsnetz zwischengeschaltet wird, nach einer bestimmten Arbeitszeit, die einstellbar ist, zu melden.

14. Maschine nach Anspruch 1, dadurch gekennzeichnet, daß diese einen Kontrolllot aufweist, welches den Abflusstand einer Wanne (44) steuert, die unter den Kammern (42) zur Entnahme des flüssigen Kaffees angebracht ist.
